(19) Europäisches Patentamt
European Patent Office
Office européen des brevets

(11) **EP 1 543 286 B1**

(12) **EUROPÄISCHE PATENTSCHRIFT**

(45) Veröffentlichungstag und Bekanntmachung des Hinweises auf die Patenterteilung:
**30.06.2010 Patentblatt 2010/26**

(21) Anmeldenummer: **03750299.4**

(22) Anmeldetag: **28.08.2003**

(51) Int Cl.:
*F41H 3/02* (2006.01)    *B32B 15/14* (2006.01)
*B32B 5/00* (2006.01)    *A41D 31/00* (2006.01)

(86) Internationale Anmeldenummer:
**PCT/DE2003/002870**

(87) Internationale Veröffentlichungsnummer:
**WO 2004/020931 (11.03.2004 Gazette 2004/11)**

(54) **INFRAROT REFLEKTIERENDES ABDECKMATERIAL**

INFRARED-REFLECTING COVERING MATERIAL

MATERIAU DE COUVERTURE REFLECHISSANT LES INFRAROUGES

(84) Benannte Vertragsstaaten:
**AT BE BG CH CY CZ DE DK EE ES FI FR GB GR HU IE IT LI LU MC NL PT RO SE SI SK TR**

(30) Priorität: **30.08.2002 DE 10240802**

(43) Veröffentlichungstag der Anmeldung:
**22.06.2005 Patentblatt 2005/25**

(73) Patentinhaber: **W.L. Gore & Associates GmbH**
**85640 Putzbrunn (DE)**

(72) Erfinder: **SCHOLZ, Hermann**
**85521 Ottobrunn (DE)**

(74) Vertreter: **Klunker . Schmitt-Nilson . Hirsch**
**Patentanwälte**
**Destouchesstrasse 68**
**80796 München (DE)**

(56) Entgegenhaltungen:
**EP-A- 1 096 604    WO-A-00/55566**
**US-A- 3 349 396    US-A- 4 465 731**
**US-A- 5 950 237    US-A- 5 955 175**

## Beschreibung

Die Erfindung betrifft elektromagnetische Strahlen reflektierende und durchlassende Materialien zur Tarnung gegen Wärmebildgeräte und die Verwendung dieser Materialien in wasserdichten, winddichten aber wasserdampfdurchlässigen Bekleidungsstücken.

Geräte, die wärmestrahlen nachweisen, sind allgemein bekannt. Die Strahlen von einem menschlichen Körper oder von anderen Objekten können durch Infrarot (IR)-nachweisende Geräte leicht festgestellt werden. Diese Geräte arbeiten in atmosphärisch durchlässigen Fenstern von 3-5 $\mu$m und 8-12$\mu$m Eine IR-Abbildung außerhalb dieser Fenster ist aufgrund der Absorption in der Atmosphäre praktisch nicht möglich. Bei mit diesen Geräten erhaltenen Abbildungen erscheinen Objekte mit hohem Emissionsgrad und Objekte mit einer höheren Temperatur im Verhältnis zum Hintergrund als helle Sihouetten. Das beruht auf der emittierenden Energie dieser Objekte. Die emittierende Energie beruht auf der Gleichung:

$$W = \varepsilon\sigma T^4$$

worin W = emittierte Leistung in W/m$^2$, $\varepsilon$ = Emissionsgrad, $\sigma$ = Stefan-Boltzman-Könstante und T = Temperatur in Kelvin sind.

Durch diese Gleichung kann man erkennen, dass es zwei mögliche Varianten gibt, ein Wärmebild zu dämpfen: die Verwendung von Materialien mit geringem Emissionsgrad auf der Außenoberfläche oder eine Verringerung der Außentemperatur. Ein typischer Versuch besteht darin, auf der Außenoberfläche Materialien mit geringem Emissionsgrad zu verwenden und diese Oberfläche mit geringem Emissionsgrad dann mit Materialien zu beschichten, die bei IR-Wellenlängen transparent, jedoch optisch undurchlässig sind, wodurch eine visuelle Tarnung bereitgestellt wird. Der zweite Versuch besteht in der Verwendung einer Wärmeisolation, um die Temperatur der Außenoberfläche zu verringern. Eine weitere Möglichkeit besteht in einer Kombination dieser Verfahren.

Es ist schon lange ein erwünschtes Ziel, Materialien zu entwickeln, die Personen oder Geräte vor einer elektromagnetisch, und insbesondere infrarot, nachweisenden Ausrüstung schützen, ohne das die Beweglichkeit der Personen oder der Geräte beeinträchtigt wird.

Vom physiologischen Standpunkt ist es erwünscht, die Wärmebelastung einer Person die IR-Tarnkleidung trägt, möglichst deutlich zu verringern. Das kann dadurch erreicht werden, dass das Kühlen des Körpers durch Verdampfen verbessert wird, indem der Dampf leicht durch die IR-Tarnkleidung hindurch gelangen kann, und indem das Gewicht und die Dicke der gesamten Wärmetampackung verringert wird.

Die EP 1 096 604 A1 beschreibt einen atmungsfähigen Verbundaufbau zum Schutz gegen elektromagnetische Hochfrequenzfelder. Dies wird unter anderem durch die mit einer Silberschicht ummantelten Polyamidfasern oder -garne erreicht. Direkt über der Silberschicht wird ein Tarndruck aufgebracht. Anschließend wird eine Polydimethylsiloxan-Polyacrylat-Schicht abschließend außenseitig aufgebracht. Auf der späteren Innenseite einer aus diesem Material hergestellten Schutzbekleidung wird eine atmungsaktive, wasserabweisende und winddichte Membrane wie z.B. aus Polyester, Polyurethan oder PTFE-Membrane, befestigt. In einer Ausführung wird eine Polyestermembrane mit einer Aluminiumbedampfung versehen. Die vielen Schichten dieses Verbundaufbaues bewirken allerdings eine Verschlechterung der Wasserdampfdurchlässigkeit. Insbesondere eine metallisierte Polyestermembrane weist aufgrund ihrer metallisch bedampften monolytischen Struktur keine nennenswerte Atmungsfähigkeit auf.

In der EP 1 136 785 A2 wird ein Tarnunterstand mit einer faltbaren, selbsttragenden Unterkonstruktion beschrieben. Der Tarnunterstand weist ein faltbares, selbsttragendes Netzwerk aus Stangen auf. Auf die äußeren Spitzenpunkte dieses Netzwerkes wird ein Tarnnetz beispielsweise nach der EP 1 096 604 A1 aufgelegt. An den inneren Anlagepunkten des Netzwerkes kann zusätzlich eine Zeltplane oder eine entsprechende, gegen Niederschläge und Witterungseinflüsse schützende Schicht vorgesehen sein. Als Zeltplane oder schützende Schicht kann auch ein Material nach der EP 1 096 604 A1 eingesetzt werden. Aufgrund dieser geometrischen Anordnung ist sichergestellt, dass immer ein Abstand des Tarnnetzes zu dem zu tarnenden Gegenstand besteht. Dieser Freiraum ermöglicht einen konvektiven Wärmeaustausch zwischen der Außen- und der Innenseite, welcher zur Tarnung gegen Wärmebildgeräte dienlich ist. Der im vorstehenden Patent beschriebene Tarnunterstand ist für solche Zwecke akzeptabel, bei denen eine starke Flexibilität und Mobilität nicht notwendig ist, zum Beispiel als Abdeckung für stationäre Objekte. Dieser Tarnunterstand hat jedoch viele Nachteile, wenn er dazu verwendet werden soll, eine einzelne Person vor einem Wärmebild zu schützen, ohne deren Beweglichkeit einzuschränken. Die wichtigsten dieser Nachteile sind das fehlende Drapiervermögen, eine geringe Wasserdampfdurchlässigkeit und das Gewicht.

Die US 5,750,242 beschreibt ein IR-reflektierendes Material mit einer mikroporösen, luftdurchlässigen, wasserdampfdurchlässigen und wasserbeständigen, metallisierten Membran, wobei das Metall eine diskontinuierliche Schicht auf der Oberfläche und den benachbarten Porenwänden der mikroporösen Membrane bildet, so dass bei Betrachtung von oberhalb der Oberfläche der Membrane das Metall kontinuierlich erscheint.

In der US 5,999,175 wird ein verbessertes IR-reffektierendes Material nach der US 5,750,242 beschrieben. Die Verbesserung besteht darin, dass die metallische Beschichtung mit einer oleophoben Beschichtung versehen ist. Damit wird erreicht, dass die Membrane gegen Verschleiß und chemischen Angriff geschützt ist.

Nachteilig an den beiden in den US-Patenten beschriebenen Materialien ist ihr Verhalten bei sehr klaren Wetterverhältnissen wie beispielsweise in einer klaren kalten Nacht oder an einem klaren sonnigen Tag. Unter diesen Bedingungen kommt es zu einer Sonnenreflexion und/oder "cold space"(kalte Himmelsreflexion) -Reflexion auf der Oberfläche der Materialien. Das bedeutet, dass Umgebungstemperaturen wie eine sehr warme (Sonne) oder sehr kalte ("cold space") Temperatur von der Metallschicht vom Körper wegreflektiert wird und eine Erwärmung oder Abkühlung der Oberfläche der Materialien bewirkt. Das führt zu einer Temperaturdifferenz zwischen der Umgebung und der zu tarnenden Person. Somit zeigt die Oberfläche der zu tarnenden Person eine wärmere oder kältere Temperatur als die Umgebung auf, was wiederum ein Erkennen der Person mit Wärmebildgeräten ermöglicht.

Als nächster Stand der Technik kommt insbesondere die US 5 955 175 in Frage.

Sie zeigt eine wasserdampfdurchlässige, metallisierte Membrane.

Es ist Aufgabe der vorliegenden Erfindung ein verbessertes IR-reflektierendes Material bereitzustellen, welches eine hohe Leistung bei der thermischen Tarnung aufweist bei gleichzeitiger Verringerung der Sonnen- und/oder" cold space"- Reflexion.

Eine weitere Aufgabe ist es ein verbessertes IR-reflektierendes Material bereitzustellen, das zu einem typischen Kleidungsstück verarbeitet oder zum Abdecken von Objekten verwendet werden kann und das zum Maskieren oder Unterdrücken eines Wärmebildes im (mittleren oder fernen) IR-Bereich, insbesondere bei einem klaren sonnigen Tag oder einer klaren Nacht, verwendet werden kann, ohne dass die Effektivität der sichtbaren Tarnung und der Tarnung im nahen IR Bereich oder der Komfort, die Effektivität und Mobilität einer Person verlorengehen.

Es ist ferner Aufgabe der vorliegenden Erfindung ein IR reflektierendes Material mit einer hohen Wasserdampfdurchlässigkeit und gleichzeitiger Wasserdichtheit bereitzustellen.

Eine weitere Aufgabe ist es, ein verbessertes IR-reflektierendes Material bereitzustellen, das ein geringes Volumen und Gewicht aufweist und flexibel, faltbar und leicht verpackbar ist.

Die Aufgabe wird durch das erfindungsgemäße Material gelöst, welches eine wasserdampfdurchlässige, metallisierte Lage und eine luftdurchlässige, drapierfähige, konvektive Lage mit einer dreidimensional durchströmbaren Struktur aufweist, wobei die konvektive Lage auf mindestens einer Seite der metallisierten Lage angeordnet ist. Die metallisierte Lage unterdrückt die Wärmeabbildung der Objekte darunter oder hinter der metallisierten Membran, indem die Wärme, welche der Körper abstrahlt, von der Metallschicht in Körperrichtung zurückreflektiert wird. Gleichfalls reflektiert die Metallschicht die Temperatur der Umgebung vom Körper weg.

In einer Ausführungsform weist die metallisierte Lage ein metallisiertes Textil auf. In einer anderen Ausführungsform weist die metallisierte Lage eine wasserdampfdurchlässige metallisierte Membrane auf, vorzugsweise ist die Membrane wasserdicht. Membranen haben den Vorteil, dünne, leichte, flexible und drapierfähige Materialien zu sein. Damit sind sie besonders für Bekleidung geeignet. Die Wasserdampfdurchlässigkeit und die gleichzeitige Wasserdichtheit der Membrane bieten dem Träger dieser Materialien sehr guten Tragekomfort.

Besonders bevorzugt ist eine wasserdampfdurchlässige, mikroporöse, metallisierte Membrane mit einer oberen Membranoberfläche, einer unteren Membranoberfläche und dazwischenliegenden Poren, wobei ein Metall eine diskontinuierliche Schicht auf mindestens einer der Oberflächen und auf den zur Oberfläche freiliegenden oberflächennahen angrenzenden Porenwänden der Membrane bildet. Somit bleiben die Poren für einen Wasserdampftransport offen. In einer bevorzugten Ausführungsform ist die Metallschicht nur auf der oberen Membranoberfläche und freiliegenden oberflächennahen Abschnitten angeordnet. Vorzugsweise ist die Membrane mit einem textilen Trägermaterial verbunden.

Die Verwendung von mikroporösen metallisierten Membrane hat mehrere Vorteile: 1. Dadurch, dass das Metall in der dreidimensionalen Struktur der mikroporösen Membrane bei Betrachtung von oberhalb der Membraneoberfläche kontinuierlich erscheint, ist eine IR Reflektion für eine ausreichende Wärmebildtarnung erreicht. 2. Durch die diskontinuierliche Metallisierung bleibt die Porosität des mikroporösen Materials erhalten. Damit können große Mengen an Wasserdampf durch die Membrane penetrieren, was zu einer Verringerung des Wärmestresses des Trägers fuhrt. Die reflektierte Wärme wird durch den natürlichen Prozess des Schwitzens vom Körper abgeführt.

In einer Ausführungsform ist mindestens die metallisierte Oberfläche der mikroporösen Membrane mit einem oleophoben Material beschichtet. Dabei bleiben die Poren für den Wasserdampftransport offen. In einer weiteren Ausführungsform bedeckt die oleophobe Schicht die oberen und die unteren Membranoberflächen und die, die Poren der Membrane bildenden Wände. Die oleophobe Behandlung schützt die Metallschicht vor Oxidation, Verschleiss und chemischen Angriff.

Die konvektive Lage ist luftdurchlässig, drapierbar und weist eine dreidimensional durchströmbare Struktur auf. Vorzugsweise ist die konvektive Lage auf der oberen Oberfläche der metallisierten Lage angeordnet. Wird aus dem erfindungsgemäßen Material ein Bekleidungsstück hergestellt, dann ist mit der oberen Oberfläche die zur Außenseite, dass heißt die zur Umgebung gerichtete Oberfläche der metallisierten Lage gemeint.

In einer weiteren Ausführungsform ist eine konvektive Lage jeweils auf der oberen und der unteren Oberfläche der metallisierten Lage angebracht. Mit dieser Maßnahme kann eine geregelte Temperatur auf beiden Oberflächen der metallisierten Lage eingestellt werden, was vorteilhaft für die IR Reflektion des erfindungsgemäßen Materials als auch für das Komfortverhalten für den Träger ist.

Die Konvektive Lage weist eine obere Lagenoberfläche auf, welche der der metallisierten Lage gegenüberliegende Oberfläche der konvektiven Lage entspricht. In einem Bekleidungsstück bedeutet die obere Lagenoberfläche die äußere Oberfläche der konvektiven Lage. In einer Ausführungsform ist auf der oberen Lagenoberfläche ein sehr luftdurchlässiges Flächengebilde angeordnet. In einer anderen Ausführungsform ist das luftdurchlässige Flächengebilde Bestandteil der konvektiven Lage und bildet selbst die obere Lagenoberfläche. Dieses Flächengebilde schützt die konvektive Lage vor mechanischer Beschädigung, Abrieb und dient der Zu- und Abfuhr von Luft. Vorzugsweise ist das Flächengebilde für IR-Wellen transparent. In einer Ausführungsform ist das Flächengebilde für IR-Wellen transparent und weist gleichzeitig Tarnfarben auf, die im sichtbaren Wellenlängenbereich liegen. Der IR Absorbtionsgrad des Materials des luftdurchlässigen Flächengebildes als auch der Farbpigmente kann zur Einstellung der Emissivität des Gesamtsystems verwendet werden.

Die dreidimensionale Struktur bewirkt, dass Luft durch die konvektive Lage in x, y und z Richtung strömt und damit Wärme von der Oberfläche der metallisierten Lage aufnimmt und abtransportiert und die äußere Oberfläche der durchströmbaren Struktur damit eher die Umgebungstemperatur annimmt Damit ist die konvektive Lage ein Mittel zur Temperaturkontrolle und zum konvektiven Wärmeaustausch auf mindestens einer der Oberflächen der metallisierten Lage. Bei einem Bekleidungsstück mit dem erfindungsgemäßen Material führt das dazu, dass die Temperatur insbesondere auf der oberen Lagenoberfläche der konvektiven Lage ungefähr der Umgebungstemperatur entspricht.

Für einen aureichenden konvektiven Wärmeaustausch weist die konvektive Lage eine Dicke von mindestens 2mm auf, vorzugsweise zwischen 2 bis 20mm auf. Vorzugsweise beträgt die Dicke 10mm. In einer Ausführungsform ist die konvektive Lage durch ein dreidimensionales Noppengewirke gebildet. Damit kann die Luft, durch die Anordnung der Noppen geführt, gleichmäßig über die Oberfläche der metallisierten Lage bzw. zwischen metallisierter Lage und Flächengebilde strömen und Wärme aufnehmen. Anstelle eines Noppengewirkes können auch Abstandsgebilde, Schäume, wabenartige, rippenartige, beflockte oder netzartige dreidimensionale Strukturen verwendet werden. Wichtig ist, dass alle diese Strukturen eine ausreichende Luftdurchlässigkeit haben. Die Luftdurchlässigkeit der konvektiven Lage beträgt in z-Richtung mindestens 100 l/m$^2$s bei einem Druck von 10Pa und in lateraler, d.h. x- und y-Richtung mindestens 50 l/m$^2$s bei einem Druck von 10Pa. Die dreidimendionale Struktur kann jede nur mögliche Form aufweisen, jedoch muß eine Durchströmbarkeit der Luft in jeder Richtung möglich sein. Erst damit wird erreicht, dass Luft über die gesamte Oberfläche der metallisierten Lage strömt und ein ständiger Austausch mit der Umgebungsluft stattfinden kann. Damit erfolgt eine Angleichung der äußeren Oberflächentemperatur der konvektiven Lage mit der Umgebungstemperatur und es verbleiben nur noch geringe Temperaturuaterschiede. Auch in einer klaren Nacht oder einem sonnigen Tag wird die thermische Tarnung verbessert.

Von weiterem Vorteil ist, dass die konvektive Lage drapierfähig ist und damit für Bekleidungsstücke geeignet ist. Vorzugsweise ist die konvektive Lage aus textilen flexiblen Materialien gefertigt.

Insbesondere wird die Aufgabe durch ein Bekleidungsstück aus einem infrarot reflektierenden Material gelöst, wobei das infrarot reflektierende Material mindestens eine metallisierte wasserdampfdurchlässige Lage und mindestens einer luftdurchlässigen, drapierfähigen, konvektiven Lage mit einer dreidimensional durchströmbaren Struktur, wobei die konvektive Lage auf mindesten einer der Oberflächen der metallisierten Lage angeordnet ist.

Definitionen/Testbeschreibungen

Unter dem Begriff "drapierfähig" sind die Eigenschaften flexibler Materialien zusammengefaßt, welche einen textilen Griff, Beweglichkeit, Anpassungsfähigkeit und Biegsamkeit umfassen und somit in Bekleidungsstücken und Abdeckhüllen verarbeitet werden können.

Unter "wasserdicht" ist zu verstehen, dass ein Material einen Wasseremgangsdrrick von mindestens 0,13bar aushält. Vorzugsweise hält die metallisierte Lage einen Wassereingangsdruck von über 1bar aus. Der Wasserdruck wird gemäß Testverfahren gemessen, in dem destilliertes Wasser bei 20±2°C auf einer Materialprobe mit einer Fläche von 100cm$^2$ zunehmend unter Druck gestellt wird. Der Wasseraufstiegsdruck beträgt 60±3cmH2O/min. Der Wasserdruck ist dann der Druck, bei dem Wasser auf der anderen Seite der Probe erscheint. Die genaue Vorgehensweise ist in der ISO Norm Nr.811 aus dem Jahre 1981 geregelt.

Unter "oleophob" ist zu verstehen, daß ein Material eine Ölabweisung von 1 oder mehr ausweist. Die Ermittlung des Ölwertes erfolgt nach der AATCC Testmethode 118-1983. Je höher der Ölwert ist, desto besser ist die Ölabweisung. Der Ölwert des Materials sollte 1 oder mehr, bevorzugt 2 oder mehr und am meisten bevorzugt 4 oder mehr betragen.

Unter "mikroporös" ist ein Material zu verstehen, welches sehr kleine, mikroskopische Poren durch die innere Struktur des Materials aufweist und die Poren einen miteinander verbundene kontinuierliche Verbindung oder Pfad von einer Oberfläche zur anderen Oberfläche des Materials bilden. Entsprechend den Abmessungen der Poren ist das Material somit durchlässig für Luft und Wasserdampf, Wasser kann jedoch nicht durch die Poren gelangen. Die Messung der Porengröße kann mit einem Coulter Porometer™ erfolgen, hergestellt bei Coulter Electronics, Inc., Hialeah, Fluoride.

Unter "wasserdampfdurchlässig" wird ein Material definiert, das einen Wasserdampfdurchgangswiderstand Ret von unter 150(m$^2$xPa)/W aufweist. Vorzugsweise weist die metallisierte Lage einen Ret von unter 20 (m$^2$xPa)/W auf. Die Wasserdampfdurchlässigkeit wird durch das Hohenstein MDM Dry Verfahren gemessen, welches in der Standard-Prüfvorschrift Nr. BPI 1.4 (1987) des Bekleidungsphysiologischen Instituts e.V. Hohenstein beschrieben wird.

Als "luftdurchlässig" wird ein Material bezeichnet, das eine Luftdurchlässigkeit von mindestens 50l/m$^2$s bei einem Luftdruck von 10Pa aufweist, gemessen mit einem Luftdurchlässigkeitsprüfgerät von Textest Instruments (FX 3300), Zürich. Die Luftdurchlässigkeit wird in Anlehnung an ISO 9237 (1995) ermittelt.

Als "metallisiert" wird ein Material bezeichnet, dass metallische Bestandteile enthält und somit eine IR Abschirmung ermöglicht. Eine Metallisierung kann jeweils auf einer oder auf beiden Seiten des Materials als auch teilweise oder vollständige innerhalb der Materialstruktur erfolgen.

Unter "konvektive Lage" wird ein Material verstanden, dass eine konvektive Luftströmung zum Wärmeaustausch ermöglicht.

Die "infrarote" Strahlung gehört zu den elektromagnetischen Wellen und beschreibt die nichtsichtbare Wärmestrahlung.

Die Erfindung soll nun anhand von Zeichnungen näher erläutert werden:

Fig. 1 zeigt eine schematische Darstellung des erfindungsgemäßen Materials

Fig.2 zeigt einen Querschnitt durch eine mikroporöse Membrane mit einer diskontinuierlichen metallischen Schicht

Fig.3 zeigt einen Querschnitt durch eine metallisierte Membrane, die auf ein Trägermaterial laminiert ist.

Fig.4 zeigt einen Querschnitt durch eine metallisierte Membrane, auf der eine oleophobe Schicht aufgebracht ist.

Fig.5 zeigt eine schematische Darstellung eines Noppengewirkes als luftdurchlässige, drapierfähige, konvektive Lage.

Fig.6 zeigt eine schematische Darstellung eines Abstandsgebildes als luftdurchlässige, drapierfähige, konvektive Lage.

Fig.7 zeigt eine schematische Darstellung einer beflockten metallisierten Lage als luftdurchlässige, drapierfähige, konvektive Lage.

Fig.8 zeigt ein Bekleidungsstück mit dem erfindungsgemäßen Material

Fig.9a zeigt einen Querschnitt durch ein Ausführungsbeispiel des erfindungsgemäßen Materials.

Fig.9b zeigt einen Querschnitt durch ein weiteres Ausführungsbeispiel des erfindungsgemäßen Materials.

Fig.10 zeigt die Wärmebildaufnahme einer metallisierten Membrane

Fig.11 zeigt die Wärmebildaufnahme einer konvektiven Lage

Fig.12 zeigt die Wärmebildaufnahme des erfindungsgemäßen Materials

Fig.13 zeigt die Wärmebildaufnahme einer weiteren metallisierten Membrane

Fig.14 zeigt eine weitere Wärmebildaufnahme des erfindungsgemäßen Materials

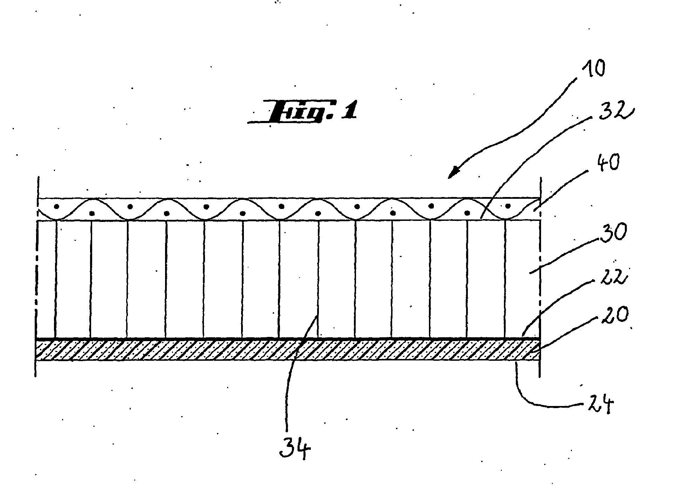

Fig. 1 zeigt eine schematische Darstellung der Erfindung. Das erfindungsgemäße infrarot reflektierende Material (10) enthält eine wasserdampfdurchlässige, metallisierte Lage (20) mit einer oberen Oberfläche (22) und einer unteren Oberfläche (24). Auf mindestens einer der Oberflächen (22,24) der metallisierten Lage (20) ist eine drapierfähige, konvektive Lage (30) angeordnet. Die konvektive Lage (30) weist eine luftdurchlässige dreidimensional durchströmbare Struktur auf. Auf einer oberen

Lagenoberfläche (32) der konvektiven Lage (30), entgegengesetzt zur metallisierten Lage (20), ist ein luftdurchlässiges Flächengebilde (40) angeordnet. In einer anderen Ausführungsform ist das luftdurchlässige Flächengebilde (40) Bestandteil der konvektiven Lage (30) und bildet selbst die obere Lagenoberfläche (32). Die dreidimensional durchströmbare Struktur ermöglicht eine Wärmekonvektion innerhalb der konvektiven Lage (30) und auf der Oberfläche (22,24) der metallisierten Lage (20) um die äußere Oberfläche der konvektiven Lage (30), d.h. das Flächengebilde (40) der Umgebungstemperatur anzugleichen. Wärmekonvektion bedeutet hierbei, eine Kühlung oder Erwärmung der von der metallisierten Lage (20) reflektierten Temperaturen durch Luftkonvektion zu erreichen.

Die metallisierte wasserdampfdurchlässige Lage (20) ist in einer Ausführungsform eine metallisierte Textilschicht. Die Metallschicht einer solchen metallisierten Textilschicht liegt als metallischer Film oder in Form von metallischen Partikeln, Fasern oder Pigmenten vor. Die Metallschicht ist entweder auf einer oder beiden Oberfläche(n) der Textilschicht aufgebracht und/oder befindet sich innerhalb der Textilschicht.

Die metallisierte Textilschicht umfaßt gewebte, gestrickte oder gewirkte Textilien aus Polypropylen, Polytetrafluorethylen, Polyethylen, Polyamid, Polyester, Polyurethan, Baumwolle, Wolle und Kombination davon.

Vorzugsweise handelt es sich bei der metallisierten Lage (20) um eine metallisierte Membrane oder Film. Die metallisierte Membrane kann als nichtporöse (monolytische) Membrane oder als mikroporöse Membrane vorliegen.

Beispiele für nichtporöse Membrane sind Polyurethan, Copolyether, Copolyester oder Silicone.

Membrane sind dünn, leicht, flexibel und drapierfähig und damit besonders für Bekleidung geeignet. Zusätzlich können sie wasserdampfdurchlässig und wasserdicht sein und verbessern damit das Komfortverhalten von Bekleidungsstücken erheblich.

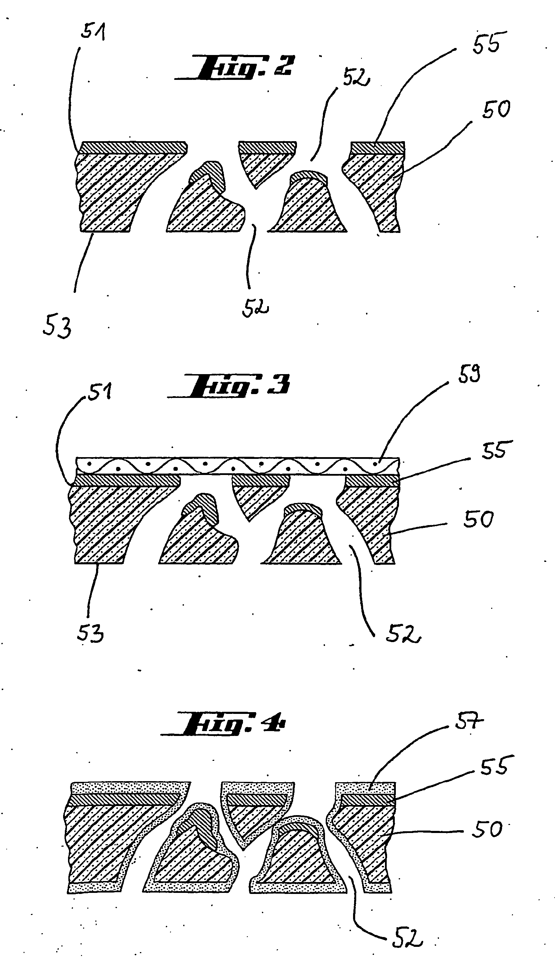

Fig. 2 zeigt einen Querschnitt durch eine bevorzugte mikroporöse Membrane (50) mit einer Metallschicht (55). Die mikroporöse Membrane (50) hat eine obere Membranoberfläche (51), eine untere Membranoberfläche (53) und diskontinuierliche Polymerabschnitte , die dazwischen Poren (52) definieren.

Bevorzugte mikroporöse Membrane (50) beinhalten Fluorpolymere wie beispielsweise Polytetrafluorethylen; Polyolefine wie Polyethylen oder Polypropylen; Polyamide, Polyester; Polysulfone, Polyethersulfone und Kombinationen davon; Polycarbonate; Polyurethane. Vorzugsweise wird eine Membrane aus gerecktem Polytetrafluorethylen (ePTFE) verwendet. Die Membrane aus ePTFE liegt mit einer Dicke zwischen 5-500$\mu$m, vorzugsweise zwischen 50-300$\mu$m vor. Dieses Material zeichnet sich durch eine Vielzahl von offenen, miteinander verbundenen Hohlräumen aus, einem großem Hohlraumvolumen und einer großen Stärke. Gerecktes PTFE ist weich, flexibel, hat stabile chemische Eigenschaften, eine hohe Durchlässigkeit gegenüber Gasen sowie Dämpfen und eine Oberfläche mit einer guten Abweisung gegen Verunreinigungen.

Die Porosität und die Porengröße ist so gewählt, dass die Gasdiffusion nicht behindert wird. Die durchschnittliche Porengröße kann 0,02 - $\mu$m betragen, vorzugsweise 0,1-0,5 $\mu$m. Die Porosität beträgt 30 - 90%, vorzugsweise 50 - 80%. Gleichzeitig ist das Material wasserdicht Ein Verfahren zur Herstellung solcher poröser Membrane aus gerecktem PTFE ist beispielsweise in den Patenten US 3,953,566 und US 4,187,390 offenbart

In einer Ausführungsform weist die ePTFE-Membrane eine wasserdampfdurchlässige kontinuierliche, hydrophile, polymere Schicht auf. Ohne Beschränkung darauf sind geeignete kontinuierliche wasserdampfdurchlässige Polymere solche aus der Familie der Polyurethane, der Familie der Silikone, der Familie der Copolyetherester oder der Familie der Copolyetherester Amide. Geeignete Copolyetherester hydrophiler Zusammensetzungen werden in der US-A-4 493 870 (Vrouenraets) und US-A- 4 725 481 (Ostapachenko) gelehrt. Geeignete Polyurethane sind in der US-A-4 194 041 (Gore ) beschrieben. Geeignete hydrophile Zusammensetzungen sind in der US-A-4 2340 838 (Foy et al.) zu finden. Eine bevorzugte Klasse von kontinuierlichen wasserdampfdurchlässigen Polymeren sind Polyurethane, besonders solche, die Oxyethyleneinheiten enthalten wie in der US-A-4 532 316 (Henn) beschrieben ist.

Die Metallschicht (55) ist vorzugsweise auf der oberen Oberfläche der Membrane (51) aufgebracht, das heißt das Metall bedeckt die obere Oberfläche der "offenen" Porenwände. "Offene" Porenwände sind die Abschnitte der Porenwände, die entweder die obere Oberfläche oder freiliegende oberflächennahe Anschnitte der Membrane umfassen. Wenn man senkrecht auf die obere Oberfläche (22) herunterschaut, bildet die Metallschicht (55) eine in der Sichtlinie durchgängige Abdeckung. Von der Seite ist erkennbar, dass die Metallschicht (55) diskontinuierlich ist, wobei die Poren (52) für den Wasserdampf offenbleiben, während die obere Oberfläche (22) und deren freiliegenden oberflächennahen Abschnitte bedeckt sind.

Die Metallisierung ist typischerweise nur auf einer Seite, sie kann jedoch auf beiden Seiten oder innerhalb der gesamten Struktur der Membran vorliegen. Das Metallisieren kann mit einer Anzahl von Beschichtungsverfahren auf der Membran erfolgen, einschließlich dem physikalischen Bedampfen durch zum Beispiel Zerstäuben, Vakuumverdampfen, chemisches Bedampfen, stromloses Plattieren oder andere bekannte Beschichtungsverfahren. Der Emissionsgrad der Metallbeschichtung kann im Bereich von 0,04 bis 1 liegen, wobei dies von der gewünschten thermischen Leistung abhängt. DerEmissionsgrad wird mit einem Emissiometer der Firma Devices and Services, Modell AE, ermittelt. Wenn ein hoher Reflexionsgrad erwünscht ist, ist eine entsprechend dicke Beschichtung mit geringem Emissionsgrad erforderlich. Wenn andererseits ein hoher Absorptionsgrad erwünscht ist, ist eine entsprechend dünne Beschichtung mit hohem Emissionsgrad notwendig.

Das in den metallisierten, mikroporösen Filmen und Membranen verwendete Metall kann irgendein Metall sein, das auf den Film oder die Membrane aufgedampft oder zerstäubt werden kann und die gewünschte reflektierende Wirkung erzeugt, wie Aluminium, Gold, Silber, Kupfer, Zink, Kobalt, Nickel, Platin, Palladium, Zinn, Titan oder dergleichen oder irgendwelche Legierungen oder Kombinationen dieser Metalle. Vorzugsweise ist die metallisierte Lage ein gerecktes Polytetrafluorethlen (ePTFE) mit einer Aluminiumbedampfung. Derartige metallisierte mikroporöse Membrane und ihre Herstellung werden beispielsweise in der US 5,750,242 beschrieben.

Die metallisierten Membrane weisen eine Wasserdampfdurchlässigkeit von unter 150($m^2$xPa)/W auf. Damit wird sichergestellt, dass Bekleidungsstücke oder Abdeckungen mit metallisierten Membranen Feuchtigkeit in Form von Wasserdampf zur Umgebung abgeben können.

In Fig. 3 ist die metallisierte mikroporöse Membrane (50) mit einem textilen Trägermaterial (59) versehen, welches der Membrane einen zusätzlichen Schutz und Festigkeit verleiht. Das Trägermaterial (59) kann mit einer wasserdampfdurchlässigen kontinuierlichen oder diskontinuierlichen Klebstoffschicht auf der metallisierten Oberfläche oder der Membrane auflaminiert sein. Es ist auch möglich auf der nichtmetallisierten Oberfläche das Trägermaterial aufzubringen. Vorteilhafterweise ist das Trägermaterial (59) ein textiles Flächengebilde aus gewebten, gewirkten oder gestrickten, natürlichen oder synthetischen textilen Materialien. Alternativ kann auf der anderen Membranoberfläche ein weiteres Flächengebilde angeordnet sein. Klebstoff und Trägermaterial (59) müssen eine gewisse IR Transparenz aufweisen, damit die vorteilhaften Eigenschaften des erfindungs gemäßen Materials nicht gemindert werden.

In einer weiteren Ausführungsform ist die metallisierte Lage oleophobiert um die Metallschicht (55) vor Oxidation zu schützen. Eine oleophobierte, metallisierte, mikroporöse Membrane (50) ist in Fig. 4 dargestellt. Dort ist eine metallisierte, mikroporöse Membrane (50) mit einer oleophoben Schicht (57) versehen. Eine Oleophobierung erfolgt nach Abschluß des Metallisierungsverfahrens und erfolgt derart, dass die Porosität der Membrane nicht deutlich verringert wird. Gewöhnlich wird ein Oleophobiermittel in flüssiger Form auf das zu oleophobierende Material aufgebracht, wie beispielsweise durch Tauchen, Tränken, Sprühen, Beschichten, Streichen, Walzen. Besonders bevorzugt wird für die vorliegende Erfindung eine oleophobierte metallisierte ePTFE Membrane entsprechend der Offenbarung der US 5,955,175. Die oleophobierte mikroporöse Membrane (50) kann ebenfalls mindestens eine textile auflaminierte Trägerschicht (59) aufweisen.

Die konvektive Lage (30) stellt eine Schicht dar, die durch Luftkonvektion Wärme oder Kälte von der Oberfläche der metallisierten Lage (20) abführt. Dazu weist die konvektive Lage (30) eine luftdurchlässige, dreidimensional durchströmbare Struktur auf. Dreidimensional durchströmbare Struktur bedeutet bei der vorliegenden Erfindung, dass in x-, y- und z-Richtung ein geringer Strömungswiderstand vorliegt sowie in z-Richtung ein Abstand definiert wird, der mit einer Umgebung in ständigem Luftaustausch steht. Damit wird erreicht, dass Luft in die konvektive Lage (30) eindringt, über die Oberfläche der metallisierten Lage strömt und in Abhängigkeit von den vorherrschenden Bedingungen Wärme oder Kälte aufnimmt und zur Umgebung hin abtransportiert.

Außerdem ist die konvektive Lage (30) drapierbar. Das Merkmal der Drapierbarkeit ist für die vorliegende Erfindung sehr wichtig, damit das erfindungsgemäße Material zu flexiblen Bekleidungsstücken (12) oder Abdeckungen verarbeitet werden kann. Dazu wird die konvektive Lage (30) aus flexiblen, vorzugsweise weichen, anpassungsfähigen Materialien wie textilen Fasern oder Garne hergestellt, die eine gewisse Verformbarkeit der konvektiven Lage (30) zulassen. Dazu zählen Materialien wie Polyolefine wie z.B. Polypropylene; Polyester, Polyamide, Aramide, Polyacrylamide oder Naturfaserstoffe wie Wolle, Seide, Baumwolle, Flachs bzw. Mischungen daraus. Außerdem können über die Verarbeitung dieser Materialien weiche, anpassungsfähige Strukturen erzielt werden.

Die konvektive Lage (30) kann jede mögliche Form oder Aufbau haben, solange eine dreidimensionale Durchströmbarkeit und eine ausreichende Luftdurchlässigkeit gegeben sind. Vorzugsweise bildet die konvektive Lage (30) einen definierten Abstand über mindestens einer der Oberflächen der metallisierten Membrane (50) in dem erfindungsgemäßen Material. Dazu weist die dreidimensionale Struktur Abstandshalter (34) auf, die vorzugsweise annähernd senkrecht innerhalb der konvektiven Lage (30) zu mindensiens einer der Oberflächen der metallisierten Lage (20) angeordnet sind. Die Abstandshalter (34) sind vorzugsweise elastisch komprimierbar und können bei eine Verformung des erfindungsgemäßen Materials nachgeben um nach Entlastung wieder in ihren ursprünglichen Zustand zurückzukehren. Vorzugsweise sind auch die Abstandshalter (34) durchströmbar. Somit verteilt die konvektive Lage einströmende Luft über der Oberfläche der metallisierten Lage (20) gleichmäßig in x-, y- und z- Richtung. Die Luft nimmt dabei überschüssige Wärme oder Kälte von der Oberfläche der metallisierten Lage (20) auf und transportiert sie von der Oberfläche weg. Damit erfolgt eine Angleichung der Oberflächentemperatur der konvektiven Lage mit der Umgebungstemperatur. Die konvektive Lage (30) hat eine Luftdurchlässigkeit in z-Richtung von mindestens 100 l/m$^2$s bei einem Druck von 10Pa und in lateraler, d.h. x- und y-Richtung von mindestens 50 l/m$^2$s bei einem Druck von 10Pa. Vorzugsweise liegt eine Luftdurchlässigkeit von 500 bis 2000 l/m$^2$s vor.

So kann die konvektive Lage (3 0) durch dreidimensionale Textilien wie Noppenvliese, Noppengestricke, Noppengewebe, Noppengewirke (36), Abstandsgewirke (60) oder beflockte Materialien (39) gebildet sein. Auch retikulierte Schäume aus Polyester oder Polyurethan sowie waben-, rippen- oder netzartige dreidimensionale Strukturen können zur Anwendung Kommen. Allgemein kann die konvektive Lage (30) aus der Gruppe der Materialien aufweisend Polypropylen, Polyester, Polyurethan, Polyethylen, Polyamide und Kombination davon gewählt sein.

Zum Erreichen einer guten Konvektion muss die konvektive Lage (30) eine Dicke von mindestens 2mm, vorzugsweise zwischen 2 bis 20mm aufweisen. Es hat sich herausgestellt, dass bei einer Dicke von 10mm eine sehr gute thermische Abschirmung erzielt wurde.

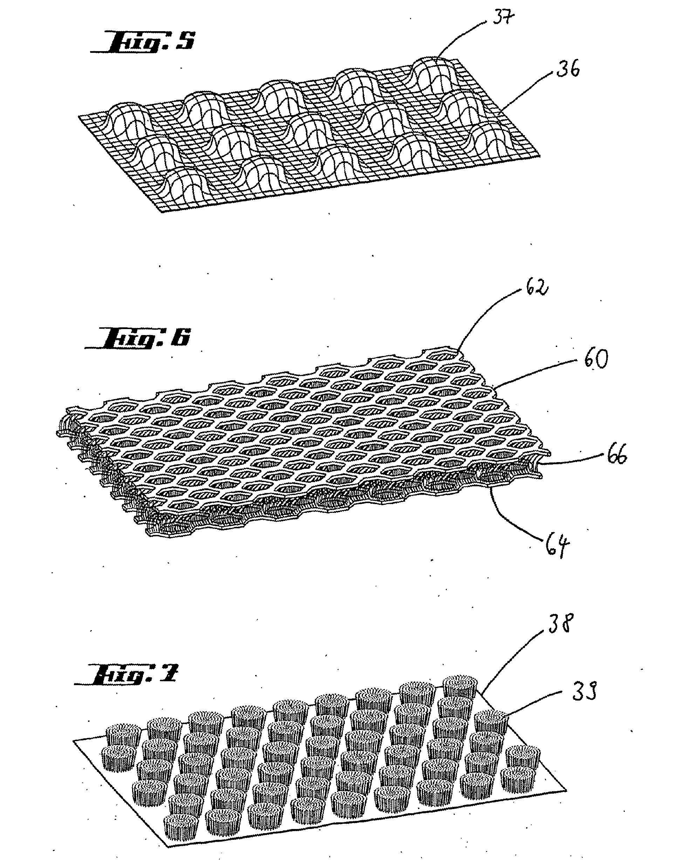

Vorteilhafte Ausführungsformen sind in den Figuren 5 bis 7 schematisch dargestellt.

Entsprechend Fig. 1 ist auf der oberen Lagenoberfläche (32) der konvektiven Lage (20), der Oberfläche die der metallisierten Lage (20) gegenüber liegt, ein luftdurchlässiges Flächengebilde (40) angeordnet Das luftdurchlässige Flächengebilde (40) kann auch Bestandteil der konvektiven Lage (30) selbst sein und die obere Lagenoberfläche (32) bilden.

Das Flächengebilde (40) schützt die konvektive Lage (30) vor äußeren Einflüsse wie Abrieb und mechanischer Beschädigung, regelt den Luftaustausch zwischen der Umgebung und der konvektiven Lage (30) und gleicht die Temperatur zwischen Umgebung und konvektiver Lage (30) aus. Insbesondere in einem Bekleidungsstück (12) stellt dieses Flächengebilde (40) die Außenseite des Bekleidungsstückes (14) dar. Die oben beschrieben Konvektion innerhalb der konvektiven Lage (30) resultiert darin, dass die Außenseite des Bekleidungsstückes (14) eine Temperatur annimt, die im wesentlichen der Umgebungstemperatur entspricht. Somit ist das Bekleidungsstück (12) mit einem Wärmebildgerät praktisch nicht sichtbar. Vorzugsweise ist das Flächengebilde (40) porös bei einer durchschnittlichen Porengröße von 0,1 bis 10μm. Bevorzugte Materialien sind Gewebe, Gewirke oder Gestricke aus Polypropylen oder Polyethylen. Polypropylen und Polyethylen sind besonders bevorzugt, da diese Materialien IR-Wellen transparent sind. Weitere Materialien können Seide, Polyamid, Polyester, Polyurethan und Kombination davon enthalten. Bei dem Flächengebilde handelt es sich vorzugsweise um ein textiles Material, und zwar um Web-, Wirk-, Strick-, Maschen- oder Netzware mit derartiger Machart, dass es eine relative hohe Luftdurchlässigkeit aufweist. Das Flächengebilde (40) hat eine Luftdurchlässigkeit von mindestens 50 l/m$^2$/s bei einem Luftdruck von 10Pa. Andere textile Materialien wie synthetische (Polyamide, Polyester, Polyolefine, Acryle) oder natürliche (Baumwolle, Wolle, Seide, oder Kombinationen davon) Materialien können Verwendung finden. Bei einer Ausführungsform der Erfindung wird ein textiles Flächengebilde mit einer gestrickten Maschenstruktur verwendet, das unter der Handelsbezeichnung Cordura®AFT von der Firma Rökona erhältlich ist. Außerdem kann das Flächengebilde (40) zu Tarnzwecken mit einem Camouflage-Aufdruck versehen sein.

Das erfindungsgemäße Material liegt in einer Ausführungsform als ein Verbund aus metallisierter Lage (20) und mindestens einer konvektiven Lage (30) vor, wobei die beiden Lagen an ausgewählten Stellen miteinander verklebt oder vernäht sind. Beim Vernähen ist darauf zu achten, dass die Nähte wasserdicht abgedichtet werden. In einer anderen Ausführungsform bilden die metallisierte Lage(20) und die mindestens eine konvektive Lage (30) ein Laminat. Dazu werden die beiden Lagen mit einem wasserdampfdurchlässigen kontinuierlichen oder diskontinuierlichen Klebstoff, wie beispielsweise Polyurethanklebstoff, unter Wärme und Druck miteinander verklebt. Zusätzlich kann das luftdurchlässige Flächengebilde (40) an der mindestens einen konvektiven Lage (30) befestigt sein, beispielsweise durch vollflächiges oder partielles Laminieren, durch Vernähen oder durch Verkleben. Auch hier ist zu beachten, dass der Klebstoff eine gewisse IR Tranparenz aufweisen muß.

Fig. 5 zeigt als luftdurchlässige, drapierfähige, konvektive Lage (30) ein Noppengewirke (36) vorzugsweise aus einem dreidimensional verformten Polypropylengewirke. Anstelle von Polypropylen kann auch ein Polyester-, Polyethylen- oder Polyamidgewirke bzw. Mischungen daraus verwendet werden. Bevorzugt sind Polypropylen und Polyethylen aufgrund ihrer IR-Wellen Transparenz. Die Noppen sind in Reihe, versetzt zueinander oder aber in jeder anderen beliebigen Struktur aus einem flächigen Grundgebilde gleichen Materials herausgeformt. Das flexible Grundgebilde ist vorzugsweise ein offenporiges Gewirke, Vlies, Gestrick, Gitter oder Gewebe. Die Luftdurchlässigkeit dieses offenporigen Noppengewirkes (36) ist vorzugsweise größer 500 l/m$^2$s bei einem Luftdruck von 10Pa. Anstelle von Noppen könne auch Stege oder ähnliche geometrische Formen auftreten, die eine dreidimensionale Struktur bilden. Vorzugsweise stehen die Noppen senkrecht zum Grundgebilde. Damit bilden die Noppen zum einen Abstandshalter (34) für eine konvektive Lage (30) mit einem definierten Abstand und zum anderen Strömungskanäle für die Luft, so dass diese sich gleichmäßig in x, y und z-Richtung verteilen kann und zwar um die Noppen herum als auch aufgrund der Offenporigkeit durch die Noppen hindurch. Das Noppengwirke (36) ist flexibel und elastisch komprimierbar und damit für die Verarbeitung in Bekleidungstücken (12) geeignet. Solche dreidimensionale Noppengewirke (36) sind beispielsweise bei der Firma Textec Construct GmbH, in Detmold, Deutschland, erhältlich. Die Noppen eines Noppengewirkes der Firma Textec weisen eine Noppenhöhe zwischen 2 bis 19mm auf. Die Herstellung derartiger Noppengewirke (36) ist beispielsweise in der Gebrauchsmusterschrift DE 200 12 275 offenbart.

Fig. 6 zeigt ein weiteres Ausführungsbeispiel für eine luftdurchlässige, drapierfähige, konvektive Lage (30). Die konvektive Lage (30) wird hier durch ein Abstandsgebilde (60) geformt. Das Abstandsgebilde (60) wird durch zwei parallel zueinander angeordneten luftdurchlässigen Flächengebilden (62, 64) beispielsweise aus Polypropylen, Polyamide, Polyester, gebildet, wobei die Flächengebilde (62, 64) durch Fasern (66) luftdurchlässig miteinander verbunden und gleichzeitig beabstandet sind. Zumindest ein Teil der Fasern (66) ist als Abstandshalter (34) senkrecht zwischen den Flächengebilden (62, 64) angeordnet. Die Fasern (66) sind aus einem flexiblen, verformbaren Material wie beispielsweise Polyester oder Polypropylen. Die Luft strömt durch die Flächengebilde (62, 64) und durch die Fasern (66) hindurch. Die Flächengebilde (62, 64) sind offenporige gewebte, gestrickte oder gewirkte textile Materialien. Ein solches Abstandsggebilde (60) ist beispielsweise bei der Firma Müller Textil GmbH in Wiehl-Drabenderhöhe, Deutschland erhältlich.

Fig. 7 zeigt ein weiteres Ausführungsbeispiel für eine luftdurchlässige, drapierfähige, -konvektive Lage (30). Bei diesem Ausführungsbeispiel wird die metallisierte Lage (20) partiell mit Fasern (66) (z.B. aus Polypropylen, Polyester, Polyamid oder Mischungen daraus) beflockt. Dadurch wird direkt auf der Oberfläche der metallisierten Lage (20) eine dreidimensionale Struktur geschaffen, indem die Fasern (66) senkrecht als Abstandshalter (34) zur metallisierten Lage (20) auf dieser befestigt werden. Die Herstellung beflockter Artikel (38) ist beispielsweise in der EP 889 697 B1 offenbart, wo Flockenteilchenmaterial (3 9) wie Flachfasern auf gerecktem PTFE befestigt ist.

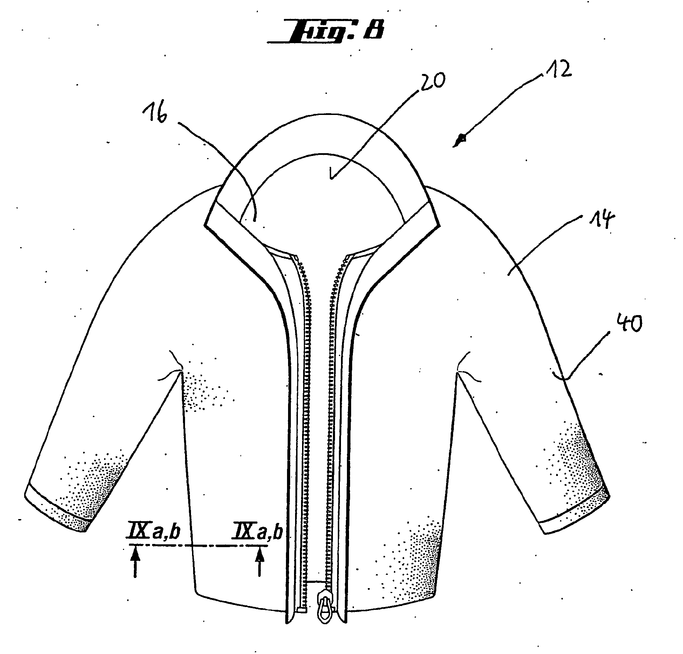

Fig. 8 zeigt ein Bekleidungsstück (12) mit dem erfindungsgemäßen Material (10) in Form einer Jacke. Zu einem Bekleidungsstück (12) im Sinne der Erfindung gehören Jacken, Mäntel, Western, Hosen, Handschuhe, Mützen, Schuhe und dergleichen. Vorzugsweise dienen die Bekleidungsstücke (12) als wasserdichte und wasserdampfdurchlässige-Tarnbekleidung. Das Bekleidungsstück (12) hat eine Außenseite (14) und eine Innenseite (16) und ist aus dem erfindungsgemäßen Material (10) aufgebaut. Dabei bildet die metallische Lage (20) die Innenseite (16) und die konvektive Lage (30) vorzugsweise mit einem luftdurchlässigem Flächengebilde (40) bildet die Außenseite (14). Die metallische Lage (20) kann zusätzlich noch mit weiteren Schichten wie Isolationsschichten und/oder Futterschichten ausgerüstet sein.

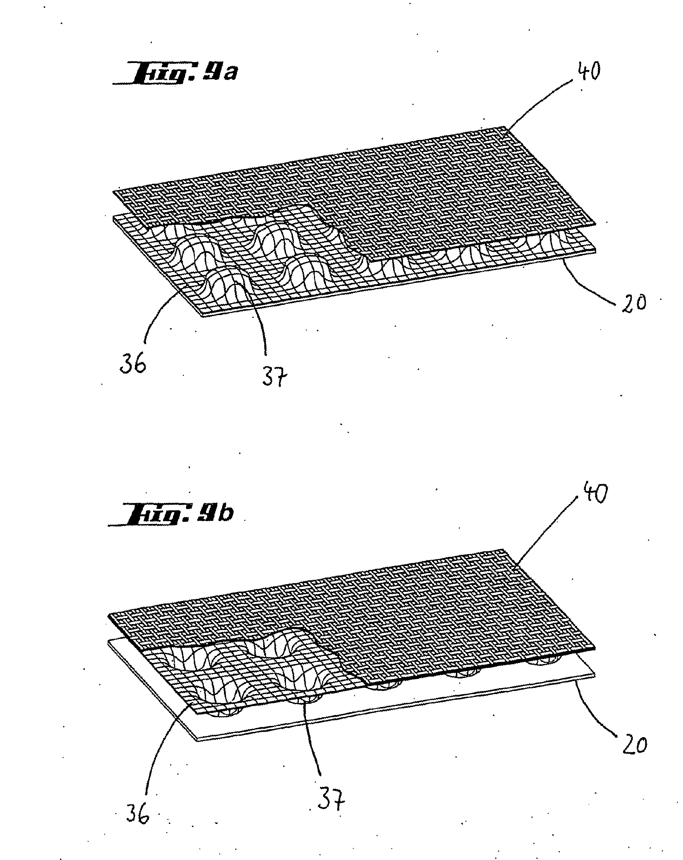

Die Figuren 9a und 9b zeigen entsprechend der gestrichelten Linie IXa, b in Fig. 8 zwei Ausführungsformen des Bekleidungsstückes (12) jeweils im Querschnitt. Fig. 9a zeigt die metallisierte Lage (20) als Innenseite (16) und das luftdurchlässige Flächengebilde (40) als Außenseite (14). Die metallisierte Lage (20) ist vorzugsweise eine metallisierte ePTFE Membrane. Das luftdurchlässige Flächengebilde (40) ist vorzugsweise eine offenporige textile Webware. Dazwischen ist eine konvektive Lage (30) in Form eines Noppengewirke (36) angeordnet. Das Noppengewirke (36) ist derart angeordnet, dass die Noppen (37) zum Flächengebilde (40) gerichtet sind. Fig.9b zeigt den gleichen Aufbau wie Fig. 9a mit dem Unterschied, dass das Noppengewirke (36) derart angeordnet ist, dass die Noppen (37) zur metallisierten Lage (20) gerichtet sind.

Beispiele

Zur Darstellung der Erfindung wurden von verschiedenen Mustern Aufnahmen mit einer Infrarotkamera ThermaCAM™PM 575 (Wärmebildgerät) der Firma Flier Systems GmbH bei einer Wellenlänge von 8-12μm gemacht. Die Infrarotkamera mißt die von einem Objekt emittierte Infrarotstrahlung und stellt diese in einem sichtbaren Bild dar. Da die Strahlung eine Funktion der Oberflächentemperatur des Objektes ist, kann die Kamera diese Temperatur genau errechnen und anzeigen. In den Versuchen wurden jeweils die Temperaturen von Umgebung und Muster ermittelt. Mit einem Computerprogramm (AGEMA®Report) wurden die Bilder bearbeitet, so dass die Durchschnittstemperaturen von Muster und Umgebung errechnet werden können. Je kleiner die Temperaturdifferenz zwischen Umgebungs- und Mustertemperatur ist, desto besser ist die thermische Tarnung.

Beispiel 1

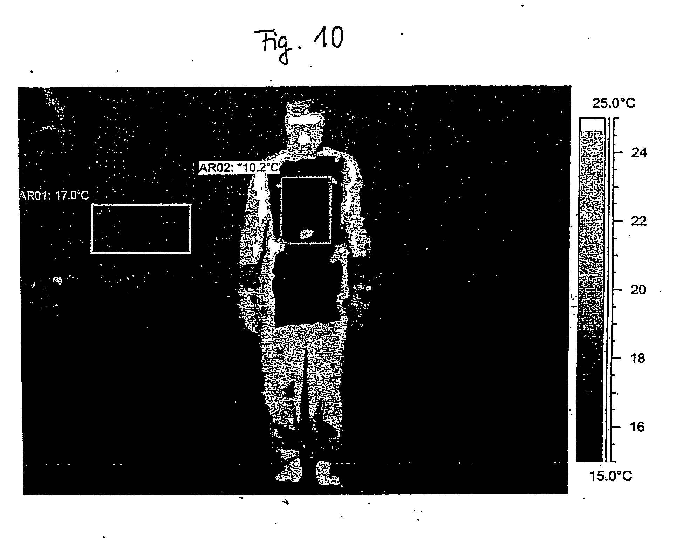

Die Versuchsergebnisse sind in den Wärmebildem der Fig. 10 bis 12 dargestellt. Die Messung fand in einem Infrarotbereich von 8-12μm am hellen Tag bei kaum Wind statt. Das jeweilige Muster war im Brustbereich in einem Tarnanzug integriert, der von einer Testperson getragen wurde. Die Mustertemperatur Tm wurde auf der Brustoberfläche der Testperson aufgenommen.

Bei der metallisierten Membrane handelt es sich um eine Membrane aus mikroporösem ePTFE mit einer Dicke von 25μm und einer nominellen Porengröße von 0,2μm. Eine solche Membrane ist bei der Firma W.L.Gore & Associates erhältlich. Die ePTFE Membrane wurde metallisiert, indem sie durch Verdampfen und Kondensieren mit Aluminium bedampft wurde. Für die Metallisierung wurde ein Aluminiumdraht in einem Oxidschmelztiegel unter einem Hochvakuum (0,0002666 Pa) bei etwas 1220°C erhitzt. Das Aluminium verdampfte. Die ePTFE Membrane wurde über den Schmelztiegel geleitet. Der Dampf aus dem Schmelztiegel stieg auf, wodurch auf der angrenzenden Seite der Membrane eine diskontinuierliche Schicht erzeugt wurde. Dann wurde die beschichtete Membrane auf eine Walze gewickelt.

Für das 1. Muster ist auf der metallisierten Seite der Membrane ein Gestrick aus Polypropylen mit einer Luftdurchlässigkeit von 65 l/m$^2$ s bei einem Luftdruck von 10Pa angeordnet.

Das 2. Muster enthält ein Abstandsgewirke mit einer Höhe von 10mm aus Polyester, erhältlich bei der Firma Müller Textil GmbH, Deutschland. Das Abstandsgewirke hat eine Luftdurchlässigkeit von 870 l/m$^2$ s. Auf dem Abstandsgewirke ist ein Gestrick aus Polyester mit einer Luftdurchlässigkeit von 550 l/m$^2$ s bei einem Luftdruck von 10Pa angeordnet. Das 3. Muster enthält eine metallisierte Membrane entsprechend dem 1. Muster, darauf angeordnet ein Abstandsgewirke nach dem 2. Muster und darauf wiederum angeordnet ein Gestrick aus Polyester mit einer Luftdurchlässigkeit von 550 l/m$^2$ s bei einem Luftdruck von 10Pa. Bei den Messungen mit der Infrarotkamera zeigten bei allen drei Mustern die Gestricklage zur Kamera.

Tabelle 1: Vergleich der thermischen Abschirmung verschiedener Abschirmmuster bei einer Wellenlänge von 8-12 μm

| Schichtaufbau Muster | Umgebungstemperatur Tu in °C | Mustertemperatur Tm in °C | Temperaturdifferenz ΔT in K |
|---|---|---|---|
| 1. metallisierte Membrane (Aluminium) mit Gestrick, Fig.10 | 17,0 | 10,2 | 6,8 |
| 2. konvektive Lage mit Gestrick, Fig.11 | 17,2 | 20,1 | 2,9 |
| 3. metallisierte Membrane (Al) mit konvektiver Lage und mit Gestrick, Fig.12 | 17,2 | 17,1 | 0,1 |

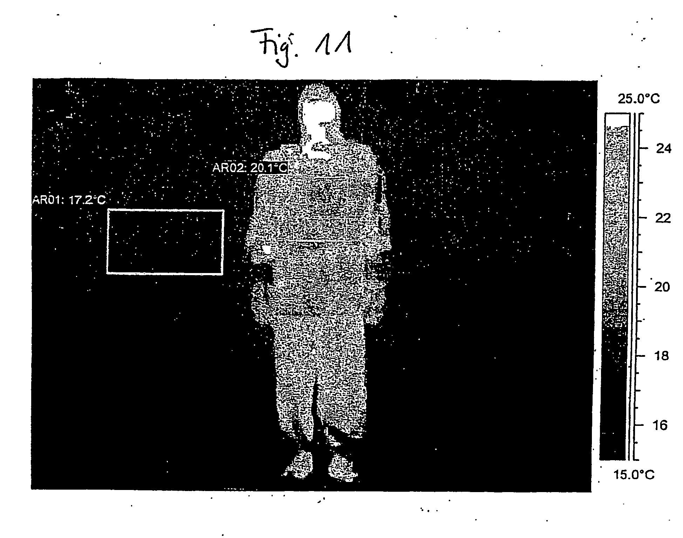

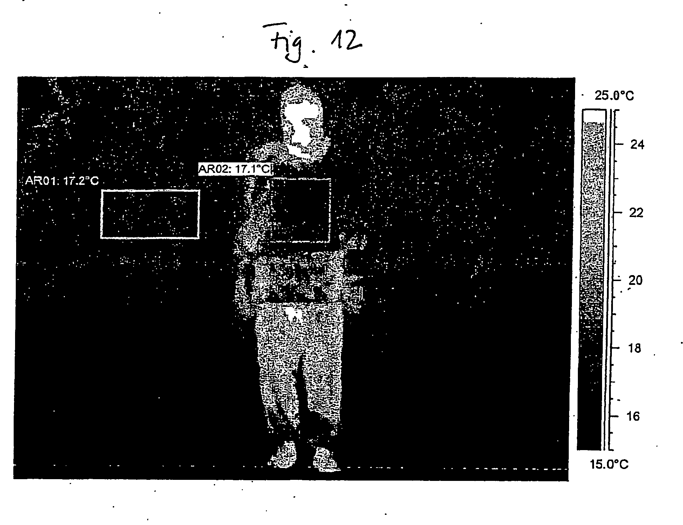

Bei dem 1. Muster (Fig. 10) kühlt sich die Oberfläche des Musters durch Reflexion des Himmels sehr stark ab und eine erkennbare Temperaturdifferenz zur Umgebungstemperatur ist erkennbar. Bei dem 2. Muster (Fig.11) ist die thermische Tarnung schon besser als beim 1. Muster, jedoch ist die Oberflächentemperatur durch Körpererwärmung und/oder Sonneneinstrahlung etwas zu hoch. Das 3. Muster (Fig.12) zeigt den erfindungsgemäßen Aufbau und im Vergleich zur Umgebung eine fast identische Temperatur.

Beispiel 2

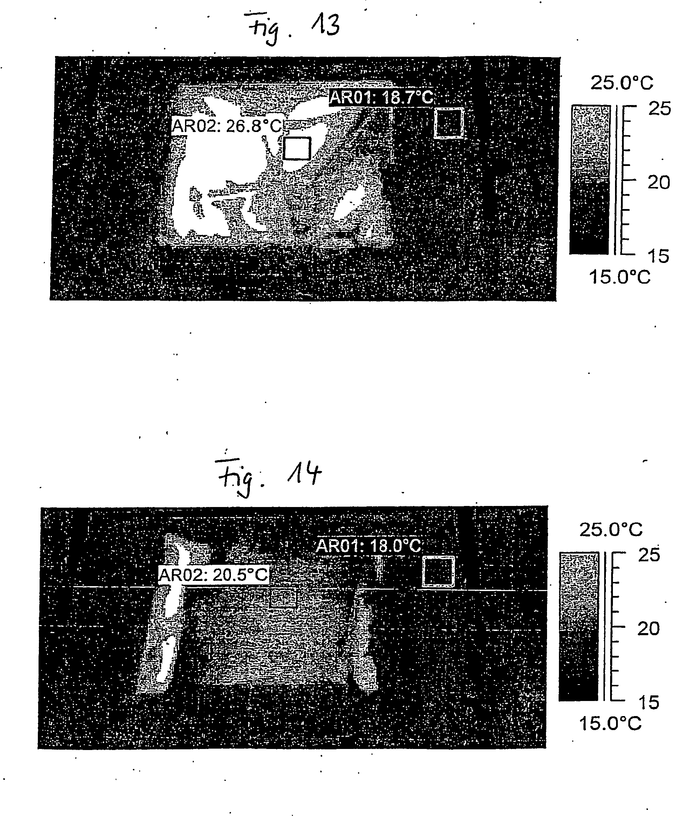

Die Versuchsergebnisse sind in den Wärmebildern der Fig. 13 bis 14 dargestellt Dieser Versuch fand bei einer Wellenlänge von 8-12$\mu$m statt.

Die Muster befanden sich auf einer heißen Platte mit einer Temperatur von 32°C zur Darstellung der menschlichen Hauttemperatur. Die Umgebung wurde auf eine Temperatur von ~18°C zur Darstellung eines kalten Himmels gekühlt. Es herrschte ein seitlicher Wind mit lm/s.

Das 4. Muster enthält eine mikroporöse Membrane wie beim 1. Muster mit einer zusätzlichen hydrophilen kontinuierlichen Beschichtung aus Polyurethan. Eine solche Membrane ist bei der Firma W.L.Gore & Associates erhältlich und wurde nach dem Verfahren zum 1. Muster metallisiert. Auf der metallisierten Schicht ist ein Gestrick aus Polyethylen mit einer Luftdurchlässigkeit von 800 l/m$^2$ s bei einem Luftdruck von 10Pa, erhältlich bei der Firma Rökona, angeordnet. Das 5. Muster enthält die gleiche Membrane wie im 4. Muster, darauf angeordnet ein Abstandsgewirke aus Polyester mit einer Höhe von 10mm und einer Luftdurchlässigkeit von 870 l/m$^2$ s, erhältlich bei der Firma Müller Textil GmbH, Deutschland und darauf wiederum angeordnet ein Gestrick aus Polyethylen mit einer Luftdurchlässigkeit von 800 l/m$^2$ s bei einem Luftdruck von 10Pa. Bei den Messungen mit der Infrarotkamera zeigen bei den beiden Mustern jeweils die Gestricklage zur Kamera.

Tab.3 Vergleich der thermischen Tarnung von zwei Abschirmmuster bei einer Wellenlänge von 8-12$\mu$m

| Schichtaufbau Muster | Umgebungstemperatur Tu in °C | Mustertemperatur Tm in °C | Temperaturdifferenz $\Delta$T in K |
|---|---|---|---|
| 4 metallisierte Membrane (AL) mit kontinuierlicher Polyurethanbeschichtung und mit Gestrick | 17,5 | 26,8 | 9,3 |
| 5. metallisierte Membrane (AL) mit kontinuierlicher Polyurethanbeschichtung und mit 10mm konvektiver Lage und mit Gestrick | 17,1 | 19,8 | 2,7 |

Im Unterschied zu Beispiel 1 erhitzt sich hier das 4. Muster im Vergleich zur Umgebungstemperatur auf. Dadurch fällt die Temperaturdifferenz entsprechend hoch aus und eine ausreichende thermische Tarnung ist nicht gegeben. Das 5. Muster zeigt eine wesentlich geringere Temperaturdifferenz. Das bedeute, dass die Oberfläche dieses Musters eine ausreichende Angleichung an die Umgebungstemperatur erfahren hat. Eine thermische Tarnung ist gegeben.

**Patentansprüche**

1. Ein infrarot reflektierendes Material (10) zum Abdecken von Objekten, aufweisend

   a) mindestens eine metallisierte, wasserdampfdurchlässige Lage (20) mit einer oberen Oberfläche (22) und einer unteren Oberfläche (24) und **gekennzeichnet durch**
   b) mindestens eine luftdurchlässige, drapierfähige, konvektive Lage (30) mit einer dreidimensional durchströmbaren Struktur, wobei die konvektive Lage (30) mindestens auf einer der Oberflächen (22, 24) der metallisierten Lage (20) angeordnet ist.

2. Material (10) nach Anspruch 1, wobei die konvektive Lage (30) eine obere Lagenoberfläche (32) aufweist und auf dieser Lagenoberfläche (32) ein luftdurchlässiges Flächengebilde (40) angeordnet ist.

**3.** Material (10) nach Anspruch 1,
wobei die konvektive Lage (30) eine obere Lagenoberfläche (32) aufweist und die obere Lagenoberfläche (32) durch ein luftdurchlässiges Flächengebilde (40) gebildet ist.

**4.** Material (10) nach Anspruch 1,
wobei die konvektive Lage (30) auf der oberen Oberfläche (22) der metallisierten Lage (20) angeordnet ist.

**5.** Material (10) nach Anspruch 1,
wobei die konvektive Lage (30) eine Dicke von mindestens 2 mm aufweist.

**6.** Material (10) nach Anspruch 1;
wobei die konvektive Lage (30) eine rippenartige, wabenartige, genoppte, netzartige, beflockte, schaumartige Struktur aufweist.

**7.** Material (10) nach Anspruch 1,
wobei die konvektive Lage (30) Abstandshalter (34) aufweist die senkrecht zu mindestens einer der Oberflächen (22,24) der metallisierten Lage (20) angeordnet sind.

**8.** Material (10) nach Anspruch 1,
wobei die konvektive Lage (30) ein dreidimensionales Noppengewirke (36) aufweist.

**9.** Material (10) nach Anspruch 1,
wobei die konvektive Lage (30) aus der Gruppe der Materialien aufweisend Polypropylen, Polyester, Polyurethan, Polyethylen, Polyamide und Kombinationen
davon ausgewählt ist.

**10.** Material (10) nach Anspruch 1,
wobei die konvektive Lage (30) eine Luftdurchlässigkeit in z-Richtung von mindestens 100 lm$^2$s bei einem Druck von 10Pa aufweist.

**11.** Material (10) nach Anspruch 1,
wobei die konvektive Lahe (30) eine Luftdurchlässigkeit in x- und y-Richtung von mindestens 50 l/m$^2$s bei einem Druck von 10Pa aufweist.

**12.** Material (10) nach Anspruch 2 und 3,
wobei das Flächengebilde (40) eine Luftdurchlässigkeit von mindestens 50 l/m$^2$s bei einem Druck von 10Pa aufweist.

**13.** Material (10) nach Anspruch 1,
wobei das Flächengebilde (40) aus der Gruppe der Materialen aufweisend Polypropylen, Seide, Polyethylen, Polyamid, Polyester, Polyurethan und Kombinationen davon ausgewählt ist

**14.** Material nach Anspruch 1,
wobei die metallisierte Lage (20) ein metallisiertes Textil aufweist.

**15.** Material (10) nach Anspruch 1,
wobei die metallisierte Lage (20) eine metallisierte Membrane aufweist.

**16.** Material (10) nach Anspruch 14,
wobei die metallisierte Membrane wasserdicht und wasserdampfdurchlässig ist.

**17.** Material nach Anspruch 1,
wobei die metallisierte Lage (20) eine mikroporöse, wasserdampfdurchlässige, polymere Membrane (50) mit einer oberen Membranoberfläche (51), einer unteren Membranoberfläche (53) und dazwischenliegenden Poren (52) aufweist und eine Metallschicht (55) zumindest eine der Oberflächen der Membrane und freiliegende oberflächennahe Abschnitte davon bedeckt.

**18.** Material (10) nach Anspruch 17,
wobei die Metallschicht (55) aus der Gruppe bestehend aus Aluminium, Gold, Silber, Kupfer, Zink, Kobalt, Nickel, Platin, Palladium, Zinn, Titan, deren Legierungen, Oxide, Nitride, Hydroxide und Kombinationen davon ausgewählt ist.

**19.** Material (10) nach Anspruch 17,
wobei die mikroporöse Membrane (50) aus der Gruppe bestehend aus gerecktem Polytetrafluorethylen (ePTFE), Polyethylen, Polypropylen, Polyurethan und Mischungen davon ausgewählt ist.

**20.** Material (10) nach Anspruch 1,
wobei die metallisierte Lage (20) eine metallisierte, mikroporöse, polymere Membrane aus gerecktem Polytetrafluorethylen aufweist.

**21.** Material (10) nach Anspruch 20,
wobei die ePTFE-Membrane eine wasserdampfdurchlässige, kontinuierliche, hydrophile, polymere Schicht aufweist.

**22.** Material (10) nach Anspruch 1, das zumindest einen Teil eines Bekleidungs- oder Zeltmaterials bildet.

**23.** Bekleidungsstück (12) aus einem infrarot reflektierenden Material (10) nach Anspruch 1.

**24.** Bekleidungsstück (12) nach Anspruch 23,
wobei die konvektive Lage (30) eine obere Lagenoberfläche (32) aufweist und auf dieser Lagenoberfläche (32) ein luftdurchlässiges Flächengebilde (40) angeordnet ist.

**25.** Bekleidungsstück (12) nach Anspruch 23,
wobei die konvektive Lage (30) eine obere Lagenoberfläche (32) aufweist und die obere Lagenoberfläche (32) durch ein luftdurchlässiges Flächengebilde (40) gebildet ist.

**26.** Bekleidungsstück (12) nach Anspruch 23,
mit einer Außenseite und einer Innenseite, wobei die obere Oberfläche (22) der metallisierten Lage (20) zur Außenseite gerichtet ist und die konvektive Lage (30) auf der zur Außenseite gerichteten oberen Oberfläche (22) angeordnet ist.

**27.** Bekleidungsstück (12) nach Anspruch 23,
wobei die konvektive Lage (30) eine Dicke von mindestens 2mm aufweist.

**28.** Bekleidungsstück (12) nach Anspruch 23,
wobei die konvektive Lage (30) eine rippenartige, wabenartige, genoppte, netzartige, beflockte, schaumartige Struktur aufweist.

**29.** Bekleidungsstück (12) nach Anspruch 23,
wobei die konvektive Lage (30) Abstandshalter (34) aufweist, die senkrecht zu mindestens einer der Oberflächen (22,24) der metallisierten Lage (20) angeordnet sind.

**30.** Bekleidungsstück (12) nach Anspruch 23, wobei die konvektive Lage (30) ein dreidimensionales Noppengewirke (36) aufweist.

**31.** Bekleidungsstück (12) nach Anspruch 23, wobei die konvektive Lage (30) aus der Gruppe der Materialien aufweisend polypropylen, Polyester, Polyurethan, Polyethylen, Polyamid und Kombinationen davon ausgewählt ist.

**32.** Bekleidungsstück (12) nach Anspruch 23, wobei die konvektive Lage (30) eine Luftdurchlässigkeit in z-Richtung von mindestens 50 l/m$^2$s bei einem Druck von 10 Pa aufweist.

**33.** Bekleidungsstück (12) nach Anspruch 23, wobei die konvektive Lage (30) eine Luftdurchlässigkeit in x- und y-Richtung von mindestens 50 l/m$^2$s bei einem Druck von 10 Pa aufweist.

**34.** Bekleidungsstück (12) nach Anspruch 24 und 25 wobei das Flächengebilde (40) eine Luftdurchlässigkeit von mindestens 50 l/m$^2$s bei einem Druck von 10 Pa aufweist.

**35.** Bekleidungsstück (12) nach Anspruch 23, wobei die metallisierte Lage (20) ein metallisiertes Textil aufweist.

**36.** Bekleidungsstück (12) nach Anspruch 23, wobei die metallisierte Lage (20) eine metallisierte Membrane aufweist.

**37.** Anordnung zum Tarnen von Objekten gegen Wärmebildgeräte mit einem Material nach Anspruch 1.

**38.** Anordnung nach Anspruch 37,
wobei das Mittel (30) eine luftdurchlässige, drapierfähige, konvektive Lage (30) mit einer dreidimensionalen durchströmbaren Struktur umfaßt.

**39.** Anordnung nach Anspruch 38,
wobei die konvektive Lage (30) Abstandshalter (24) aufweist, die senkrecht zu mindestens einer der Oberflächen (22, 24) der metallisierten Lage (20) vorgesehen sind.

**Claims**

**1.** Infrared-reflecting material (10) for covering objects, comprising

   a) at least one metallized water-vapor-permeable ply (20) having a top surface (22) and a bottom surface (24) and **characterized by**
   b) at least one ply (30) that is air permeable, drapable and convective and has a three-dimensionally transmissive structure, wherein the convective ply (30) is disposed on one or more of the surfaces (22, 24) of the metallized ply (20).

**2.** Material (10) according to Claim 1 wherein the convective ply (30) has a top surface (32) and an air-permeable sheetlike structure (40) is disposed on this surface (32).

**3.** Material (10) according to Claim 1 wherein the convective ply (30) has a top surface (32) and the top surface (32) is formed by an air-permeable sheetlike structure (40).

**4.** Material (10) according to Claim 1 wherein the convective ply (30) is disposed on the top surface (22) of the metallized ply (20).

**5.** Material (10) according to Claim 1 wherein the convective ply (30) is not less than 2 mm in thickness.

**6.** Material (10) according to Claim 1 wherein the convective ply (30) has a structure that is riblike, honeycomblike, pimpled, netlike, beflocked, foam-like.

**7.** Material (10) according to Claim 1 wherein the convective ply (30) comprises spacers (34) perpendicular to one or more of the surfaces (22, 24) of the metallized ply (20).

**8.** Material (10) according to Claim 1 wherein the convective ply (30) is a three-dimensional pimpled formed-loop knit (36).

**9.** Material (10) according to Claim 1 wherein the convective ply (30) is selected from materials comprising polypropylene, polyester, polyurethane, polyethylene, polyamide and combinations thereof.

**10.** Material (10) according to Claim 1 wherein the convective ply (30) has an air permeability in the z direction of not less than 100 l/m$^2$s at a pressure of 10 Pa.

**11.** Material (10) according to Claim 1 wherein the convective ply (30) has an air permeability in the x and y direction of not less than 50 l/m$^2$s at a pressure of 10 Pa.

**12.** Material (10) according to Claim 2 and 3 wherein the sheetlike structure (40) has an air permeability of not less than 50 l/m$^2$s at a pressure of 10 Pa.

**13.** Material (10) according to Claim 1 wherein the sheetlike structure (40) is selected from the group of materials comprising polypropylene, silk, polyethylene, polyamide, polyester, polyurethane and combinations thereof.

**14.** Material according to Claim 1 wherein the metallized ply (20) comprises a metallized textile.

**15.** Material (10) according to Claim 1 wherein the metallized ply (20) comprises a metallized membrane.

**16.** Material (10) according to Claim 14 wherein the metallized membrane is watertight and water vapor permeable.

**17.** Material according to Claim 1 wherein the metallized ply (20) comprises a microporous water-vapor-permeable polymeric membrane (50) having a top surface (51), a bottom surface (53) and in-between pores (52) and a metal layer (55) covers one or more of the surfaces of the membrane and exposed sub-surface portions thereof.

**18.** Material (10) according to Claim 17 wherein the metal layer (55) is selected from the group consisting of aluminum, gold, silver, copper, zinc, cobalt, nickel, platinum, palladium, tin, titanium, their alloys, oxides, nitrides, hydroxides and combinations thereof.

**19.** Material (10) according to Claim 17 wherein the microporous membrane (50) is selected from the group consisting of expanded polytetrafluoroethylene (ePTFE), polyethylene, polypropylene, polyurethane and blends thereof.

**20.** Material (10) according to Claim 1 wherein the metallized ply (20) comprises a metallized microporous polymeric membrane of expanded polytetrafluoroethylene.

**21.** Material (10) according to Claim 20 wherein the ePTFE membrane comprises a polymeric layer which is water vapor permeable, continuous and hydrophilic.

**22.** Material (10) according to Claim 1 that forms at least part of a clothing or tenting material.

**23.** Garment (12) composed of an infrared-reflecting material (10) according to Claim 1.

**24.** Garment (12) according to Claim 23 wherein the convective ply (30) has a top surface (32) and an air-permeable sheetlike structure (40) is disposed on this surface (32).

**25.** Garment (12) according to Claim 23 wherein the convective ply (30) has a top surface (32) and an air-permeable sheetlike structure (40) is disposed on this top surface (32).

**26.** Garment (12) according to Claim 23 that has an outer side and an inner side and wherein the top surface (22) of the metallized ply (20) faces the outer side and the convective ply (30) is disposed atop the top surface (22) which faces the outer side.

**27.** Garment (12) according to Claim 23 wherein the convective ply (30) is not less than 2 mm in thickness.

**28.** Garment (12) according to Claim 23 wherein the convective ply (30) has a structure that is riblike, honeycomblike, pimpled, netlike, deflocked, foam-like.

**29.** Garment (12) according to Claim 23 wherein the convective ply (30) comprises spacers (34) perpendicular to one or more of the surfaces (22, 24) of the metallized ply (20).

**30.** Garment (12) according to Claim 23 wherein the convective ply (30) is a three-dimensional pimpled formed-loop knit (36).

**31.** Garment (12) according to Claim 23 wherein the convective ply (30) is selected from the group of materials comprising polypropylene, polyester, polyurethane, polyethylene, polyamide and combinations thereof.

**32.** Garment (12) according to Claim 23 wherein the convective ply (30) has an air permeability in the z direction of not less than 50 l/m$^2$s at a pressure of 10 Pa.

**33.** Garment (12) according to Claim 23 wherein the convective ply (30) has an air permeability in the x and y directions of not less than 50 l/m$^2$s at a pressure of 10 Pa.

**34.** Garment (12) according to Claim 24 and 25 wherein the sheetlike structure (40) has an air permeability of not less

than 50 l/m$^2$s at a pressure of 10 Pa.

**35.** Garment (12) according to Claim 23 wherein the metallized ply (20) comprises a metallized textile.

**36.** Garment (12) according to Claim 23 wherein the metallized ply (20) comprises a metallized membrane.

**37.** Arrangement for camouflaging objects against thermal imagers with a material according to Claim 1.

**38.** Arrangement according to Claim 37 wherein the means (30) comprises an air-permeable drapable convective ply (30) having a three-dimensional transmissive structure.

**39.** Arrangement according to Claim 38 wherein the convective ply (30) comprises spacers (24) perpendicular to one or more of the surfaces (22, 24) of the metallized ply (20).

**Revendications**

**1.** Matériau (10) réfléchissant les infrarouges pour recouvrir des objets, comprenant

a) au moins une couche métallisée perméable à la vapeur d'eau (20), ayant une surface supérieure (22) et une surface inférieure (24), **caractérisé par**
b) au moins une couche convective (30) perméable à l'air et pouvant servir de drapage ayant une structure tridimensionnelle pouvant être traversée par un courant, la couche convective (30) étant disposée au moins sur l'une des surfaces (22, 24) de la couche métallisée (20).

**2.** Matériau (10) selon la revendication 1, la couche convective (30) présentant une surface de couche supérieure (32) et un produit plan (40) perméable à l'air étant disposé sur cette surface de couche (32).

**3.** Matériau (10) selon la revendication 1, la couche convective (30) présentant une surface de couche supérieure (32) et la surface de couche supérieure (32) étant formée par un produit plan (40) perméable à l'air.

**4.** Matériau (10) selon la revendication 1, la couche convective (30) étant disposée sur la surface supérieure (22) de la couche métallisée (20).

**5.** Matériau (10) selon la revendication 1, la couche convective (30) présentant une épaisseur d'au moins 2 mm.

**6.** Matériau (10) selon la revendication 1, la couche convective (30) présentant une structure nervurée, alvéolaire, boulochée, réticulée, veloutée, moussée.

**7.** Matériau (10) selon la revendication 1, la couche convective (30) présentant des entretoises (34) qui sont disposées perpendiculairement à au moins l'une des surfaces (22, 24) de la couche métallisée (20).

**8.** Matériau (10) selon la revendication 1, la couche convective (30) présentant un produit bouloché (36) tridimensionnel.

**9.** Matériau (10) selon la revendication 1, la couche convective (30) étant choisie dans le groupe des matériaux qui présente le polypropylène, le polyester, le polyuréthane, le polyéthylène, le polyamide et des combinaisons de ceux-ci.

**10.** Matériau (10) selon la revendication 1, la couche convective (30) présentant une perméabilité à l'air dans le sens z d'au moins 100 l/m$^2$s à une pression de 10 Pa.

**11.** Matériau (10) selon la revendication 1, la couche convective (30) présentant une perméabilité à l'air dans le sens x et y d'au moins 50 l/m$^2$s à une pression de 10 Pa.

**12.** Matériau (10) selon les revendications 2 et 3, le produit plan (40) présentant une perméabilité à l'air d'au moins 50 l/m$^2$s à une pression de 10 Pa.

**13.** Matériau (10) selon la revendication 1, le produit plan (40) étant choisi dans le groupe des matériaux qui présente le polypropylène, la soie, le polyéthylène, le polyamide, le polyester, le polyuréthane et des combinaisons de ceux-ci.

**14.** Matériau selon la revendication 1, la couche métallisée (20) présentant un textile métallisé.

**15.** Matériau (10) selon la revendication 1, la couche métallisée (20) présentant une membrane métallisée.

**16.** Matériau (10) selon la revendication 14, la membrane métallisée (20) étant étanche et perméable à la vapeur d'eau.

**17.** Matériau selon la revendication 1, la couche métallisée (20) présentant une membrane en polymère (50) microporeuse perméable à la vapeur d'eau, ayant une surface de membrane supérieure (51), une surface de membrane inférieure (53) et des pores (52) disposés entre celles-ci et une couche métallique (55) recouvrant au moins l'une des surfaces de la membrane et des sections mises à découvert de celle-ci proches de la surface.

**18.** Matériau (10) selon la revendication 17, la couche métallique (55) étant choisie dans le groupe composé de l'aluminium, de l'or, de l'argent, du cuivre, du zinc, du cobalt, du nickel, du platine, du palladium, de l'étain, du titane, de leurs alliages, oxydes, nitrures, hydroxydes et combinaisons de ceux-ci.

**19.** Matériau (10) selon la revendication 17, la membrane microporeuse (50) étant choisie dans le groupe composé du polytétrafluoréthylène expansé (ePTFE), du polyéthylène, du polypropylène, du polyuréthane et de mélanges de ceux-ci.

**20.** Matériau (10) selon la revendication 1, la couche métallisée (20) présentant une membrane de polymère métallisée microporeuse en polytétrafluoréthylène expansé.

**21.** Matériau (10) selon la revendication 20, la membrane en ePTFE présentant une couche de polymère perméable à la vapeur d'eau, continue hydrophile.

**22.** Matériau (10) selon la revendication 1, qui forme au moins une partie d'un matériau d'habillement ou de tente.

**23.** Pièce de vêtement (12) en matériau (10) réfléchissant les infrarouges selon la revendication 1.

**24.** Pièce de vêtement (12) selon la revendication 23, la couche convective (30) présentant une surface de couche supérieure (32) et un produit plan (40) perméable à l'air étant disposé sur cette surface de couche (32).

**25.** Pièce de vêtement (12) selon la revendication 23, la couche convective (30) présentant une surface de couche supérieure (32) et la surface de couche supérieure (32) étant formée par un produit plan (40) perméable à l'air.

**26.** Pièce de vêtement (12) selon la revendication 23, comprenant un côté extérieur et un côté intérieur, la surface supérieure (22) de la couche métallisée (20) étant dirigée vers le côté extérieur et la couche convective (30) étant disposée sur la surface supérieure (22) dirigée vers le côté extérieur.

**27.** Pièce de vêtement (12) selon la revendication 23, la couche convective (30) présentant une épaisseur d'au moins 2 mm.

**28.** Pièce de vêtement (12) selon la revendication 23, la couche convective (30) présentant une structure nervurée, alvéolaire, boulochée, réticulée, veloutée, moussée.

**29.** Pièce de vêtement (12) selon la revendication 23, la couche convective (30) présentant des entretoises (34) qui sont disposées perpendiculairement à au moins l'une des surfaces (22, 24) de la couche métallisée (20).

**30.** Pièce de vêtement (12) selon la revendication 23, la couche convective (30) présentant un produit bouloché (36) tridimensionnel.

**31.** Pièce de vêtement (12) selon la revendication 23, la couche convective (30) étant choisie dans le groupe des matériaux qui présente le polypropylène, le polyester, le polyuréthane, le polyéthylène, le polyamide et des combinaisons de ceux-ci.

**32.** Pièce de vêtement (12) selon la revendication 23, la couche convective (30) présentant une perméabilité à l'air dans le sens z d'au moins 50 l/m$^2$s à une pression de 10 Pa.

33. Pièce de vêtement (12) selon la revendication 23, la couche convective (30) présentant une perméabilité à l'air dans le sens x et y d'au moins 50 l/m$^2$s à une pression de 10 Pa.

34. Pièce de vêtement (12) selon les revendications 24 et 25, le produit plan (40) présentant une perméabilité à l'air d'au moins 50 l/m$^2$s à une pression de 10 Pa.

35. Pièce de vêtement (12) selon la revendication 23, la couche métallisée (20) présentant un textile métallisé.

36. Pièce de vêtement (12) selon la revendication 23, la couche métallisée (20) présentant une membrane métallisée.

37. Arrangement pour camoufler des objets contre des détecteurs de rayonnements thermiques avec un matériau selon la revendication 1.

38. Arrangement selon la revendication 37, le moyen (30) comprenant une couche convective (30) perméable à l'air et pouvant servir de drapage ayant une structure tridimensionnelle pouvant être traversée par un courant.

39. Arrangement selon la revendication 38, la couche convective (30) présentant des entretoises (24) qui sont disposées perpendiculairement à au moins l'une des surfaces (22, 24) de la couche métallisée (20).

Fig. 1

**Fig. 2**

**Fig. 3**

**Fig. 4**

Fig. 5

Fig. 6

Fig. 7

Fig. 8

*Fig. 9a*

40

36

37

20

*Fig. 9b*

40

36

37

20

Fig. 10

Fig. 11

Fig. 12

Fig. 13

Fig. 14

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1096604 A1
- EP 1136785 A2
- US 5750242 A
- US 5999175 A
- US 5955175 A
- US 3953566 A
- US 4187390 A

- US 4493870 A, Vrouenraets
- US 4725481 A
- US 4194041 A, Gore
- US 42340838 A, Foy
- US 4532316 A, Henn
- DE 20012275
- EP 889697 B1